# EUROPEAN PATENT APPLICATION

(11) **EP 4 694 104 A1**
(43) Date of publication of application: **11.02.2026**
(21) Application number: 23930591.5
(22) Date of filing: 30.03.2023
(51) Int. Cl.: H04M 3/56, G06F 3/16

(54) **COMMUNICATION TERMINAL, METHOD, AND PROGRAM**

(71) Applicant: HONDA MOTOR CO., LTD., Tokyo 105-8404 (JP)
(72) Inventor: KIKUCHI Shinichi, Tokyo 107-8556 (JP)
(74) Representative: Weickmann & Weickmann PartmbB
(86) International application number: PCT/JP2023/013393
(87) International publication number: WO 2024/201954

(57) **Abstract**

There is provided a communication terminal that is mounted on a moving object for a remote conference to be conducted, the communication terminal including: an acceptance unit which accepts a plurality of users in the moving object as participants in the remote conference; a speaker identification unit which identifies a speaker from among the plurality of users accepted by the acceptance unit as the participants in the remote conference; and a control unit which performs, on a remote conference system, a control to highlight and display a user identified by the speaker identification unit as the speaker.

## Description

### BACKGROUND

### 1. TECHNICAL FIELD

The present invention relates to a communication terminal, a method, and a program.

### 2. RELATED ART

Patent document 1 discloses a technology in which a mobile terminal is brought into a vehicle on which vehicle equipment is mounted, and when the vehicle starts traveling, the mobile terminal starts communicating with the vehicle equipment that senses an event such as a collision, and performs notification processing regarding the event via a communication network.

### Prior Art Documents

### Patent Document

Patent Document 1: Japanese Patent Application Publication No. 2019-33427

### Technical Problem

However, when a plurality of users participate in a remote conference by a single line through a communication terminal installed in a moving object, there is a problem that regarding who is speaking among the plurality of users, it is not easy to properly give a presentation to another participant. In order to solve the problem described above, the present application aims to enhance operability when the plurality of users participate in the remote conference through the communication terminal installed in the moving object. In addition, the present invention is to further improve traffic safety to contribute to a development of a sustainable transportation system. General Disclosure

In a first aspect of the present invention, a communication terminal is provided. The communication terminal is mounted on a moving object for a remote conference to be conducted. The communication terminal includes an acceptance unit which accepts a plurality of users in the moving object as participants in the remote conference. The communication terminal includes a speaker identification unit which identifies a speaker from among the plurality of users accepted by the acceptance unit as the participants in the remote conference. The communication terminal includes a control unit which performs, on a remote conference system, a control to highlight and display a user identified by the speaker identification unit as the speaker.

In the communication terminal described above, the speaker identification unit may identify the speaker from among the plurality of users, based on at least one of (i) image information of an inside of the moving object acquired by an image capturing apparatus mounted on the moving object, or (ii) voice information acquired by a microphone installed on the moving object.

Any of the communication terminals described above may include a seating information acquisition unit which acquires seating positions of the plurality of users in the moving object. The speaker identification unit may identify the speaker from among the plurality of users, based on a sound source direction that is detected from voice information acquired by a plurality of microphones mounted on the moving object, installation positions of the plurality of microphones in the moving object, and the seating positions of the plurality of users acquired by the seating information acquisition unit.

Any of the communication terminals described above may include a seating information acquisition unit which acquires seating positions of the plurality of users in the moving object. The speaker identification unit may identify the speaker from among the plurality of users, based on voice information acquired by each of microphones respectively mounted to correspond to a plurality of seats of the moving object, and the seating positions of the plurality of users acquired by the seating information acquisition unit.

In any of the communication terminals described above, when the acceptance unit accepts the plurality of users as participants in a conference, the seating information acquisition unit may acquire the seating positions of the plurality of users, by acquiring information for specifying a seat position of the moving object from each of the plurality of users.

In any of the communication terminals described above, when the acceptance unit accepts the plurality of users as participants in a conference, the seating information acquisition unit may acquire the seating positions of the plurality of users, based on a position of a user terminal which is identified from a wireless signal received from the user terminal that is carried by each of the plurality of users.

In any of the communication terminals described above, the moving object may be a vehicle.

In a second aspect of the present invention, a method is provided. The method is executed by a communication terminal that is mounted on a moving object for a remote conference to be conducted. The method includes accepting a plurality of users in the moving object as participants in the remote conference. The method includes identifying a speaker from among the plurality of users accepted as the participants in the remote conference. The method includes performing, on a remote conference system, a control to highlight and display a user identified from among the plurality of users as the speaker.

In a third aspect of the present invention, a program is provided. The program causes a computer to function as any of the communication terminals described above.

The summary clause does not necessarily describe all necessary features of the embodiments of the present invention. The present invention may also be a sub-combination of the features described above.

### BRIEF DESCRIPTION OF THE DRAWINGS

Fig. 1 conceptually shows a configuration of a remote conference system 5 in an embodiment.
Fig. 2 shows an example of a functional configuration of a remote conference management system 110 included in a remote conference server 100.
Fig. 3 shows a functional configuration of a communication terminal 20 included in a moving object 10, together with a display apparatus 22, a microphone 60, and an image capturing apparatus 28.
Fig. 4 shows an example of a sequence that is executed by a user terminal 80, the communication terminal 20, the remote conference server 100, and a user terminal 120.
Fig. 5 schematically shows an example of a screen 500 which is displayed on the display apparatus 22 or the user terminal 120.
Fig. 6 schematically shows an example of a screen 600 which is displayed on the display apparatus 22 or the user terminal 120.
Fig. 7 is a flowchart showing a processing procedure in relation to processing of identifying a speaker by the communication terminal 20.
Fig. 8 schematically shows an example of a screen 800 which is displayed on the display apparatus 22 or the user terminal 120.
Fig. 9 shows a configuration of a moving object 910 as a modified example of the moving object 10.
Fig. 10 shows an example of a computer 2000.

### DESCRIPTION OF EXEMPLARY EMBODIMENTS

Hereinafter, the invention will be described through embodiments of the invention, but the following embodiments do not limit the invention according to claims. In addition, not all of the combinations of features described in the embodiments are essential to the solving means of the invention.

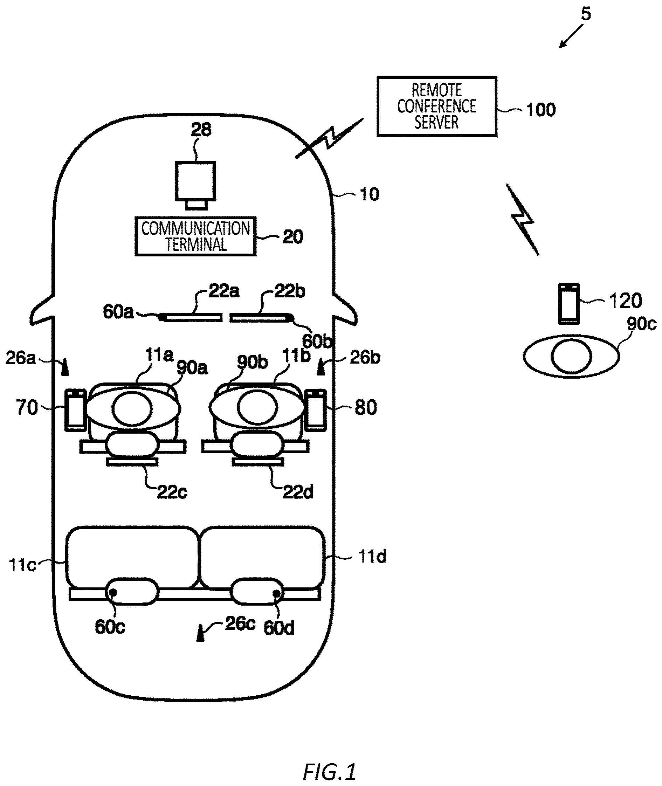

Fig. 1 conceptually shows a configuration of a remote conference system 5 in an embodiment. The remote conference system 5 includes a moving object 10, a remote conference server 100, and a user terminal 120. In the present embodiment, the moving object 10 is a vehicle.

The moving object 10 includes: a communication terminal 20; a display apparatus 22a, a display apparatus 22b, a display apparatus 22c, and a display apparatus 22d; a seat 11a, a seat 11b, a seat 11c, and a seat 11d; an image capturing apparatus 28; a microphone 60a, a microphone 60b, a microphone 60c, and a microphone 60d; and an antenna 26a, an antenna 26b, and an antenna 26c.

The display apparatus 22a, the display apparatus 22b, the display apparatus 22c, and the display apparatus 22d are provided at positions corresponding to the seat 11a, the seat 11b, the seat 11c, and the seat 11d, respectively. In the present embodiment, the display apparatus 22a, the display apparatus 22b, the display apparatus 22c, and the display apparatus 22d may be collectively referred to as a "display apparatus 22". The display apparatus 22 displays an image for a remote conference. The display apparatus 22 further has a function of acquiring an instruction from a user 90 by a touch operation or the like.

The microphone 60a, the microphone 60b, the microphone 60c, and the microphone 60d are provided at positions corresponding to the seat 11a, the seat 11b, the seat 11c, and the seat 11d, respectively. For example, the microphone 60a and the microphone 60b corresponding to the seat 11a and the seat 11b which are front seats, are provided near the display apparatus 22a and the display apparatus 22b, respectively. The microphone 60c and the microphone 60d corresponding to the seat 11c and the seat 11d which are rear seats, are provided near positions of headrests of the seat 11c and the seat 11d, respectively. The microphones 60a, the microphone 60b, the microphone 60c, and the microphone 60d may be collectively referred to as a "microphone 60".

The remote conference server 100 is able to communicate with the communication terminal 20 and the user terminal 120. The remote conference server 100 manages a participant who participates in the remote conference. The communication terminal 20 and the user terminal 120 are able to communicate with each other.

The communication terminal 20 cooperates with the remote conference server 100 to provide a function for an occupant in the moving object 10 to participate in the remote conference. The display apparatus 22 and the microphone 60 are connected to the communication terminal 20. The communication terminal 20 causes the display apparatus 22 to display a conference image received under a management of the remote conference server 100. The communication terminal 20 is connected to the microphone 60. The communication terminal 20 transmits, as voice data, a voice acquired from the microphone 60, to the user terminal 120 which is used by the participant of the conference.

A user 90a and a user 90b are occupants of the moving object 10. The user 90a is a user of a user terminal 70. The user 90b is a user of a user terminal 80. The user terminal 70 and the user terminal 80 are, for example, smartphones. The user terminal 70 and the user terminal 80 may be mobile terminals other than the smartphones. The user terminal 70 and the user terminal 80 may be computing devices having a communication function. The user terminal 70 and the user terminal 80 may be terminals such as a mobile phone, a PDA (registered trademark), a tablet computer, a notebook computer, a laptop computer, and a wearable computer.

The antenna 26a, the antenna 26b, and the antenna 26c are fixedly provided at different positions in the moving object 10. In the present embodiment, the antenna 26a, the antenna 26b, and the antenna 26c may be collectively referred to as an "antenna 26". The communication terminal 20 performs, via the antenna 26, a wireless communication with the user terminal 70 or the user terminal 80 which is carried by the user 90 in the moving object 10. For example, via the antenna 26, the communication terminal 20 performs the wireless communication using a UWB (Ultra-Wide Band) with the user terminal 70 which is carried by the user 90a. For example, the communication terminal 20 calculates a position of the user terminal 70, based on a signal received in the wireless communication using the UWB with the user terminal 70; and determines on which seat the user 90a is seated, among the seat 11a, the seat 11b, the seat 11c, and the seat 11d, based on a detected position of the user terminal 70.

A user 90c is present outside the moving object 10. The user 90c is a user of the user terminal 120. The user terminal 120 may be, for example, a smartphone. The user terminal 120 may be a computing device having a communication function. The user terminal 120 may be a mobile terminal such as a mobile phone, a PDA (registered trademark), a tablet computer, a notebook computer, a laptop computer, and a wearable computer, or may be a desktop computer.

Here, it is assumed that the user 90a, the user 90b, and the user 90c are participating in the same remote conference that is managed by the remote conference server 100. It is assumed that the user 90a is participating in the remote conference using the communication terminal 20, the user 90b is participating in the remote conference using the user terminal 80, and the user 90c is participating in the remote conference using the user terminal 120.

While the users 90 are participating in the remote conference, the communication terminal 20, the user terminal 80, and the user terminal 120 transmit current position information and moving speed information to the remote conference server 100 at a predetermined time interval. For example, each of the communication terminal 20, the user terminal 80, and the user terminal 120 transmits the current position information calculated based on a signal received from a GNSS satellite, to the remote conference server 100 at a predetermined time interval. The user terminal 80 and the user terminal 120 further transmit the current moving speed information that is calculated from a temporal change of the current position information, to the remote conference server 100 at a predetermined time interval. The communication terminal 20 transmits, to the remote conference server 100 at a predetermined time interval, the current position information that is calculated from the temporal change of the current position information, or the moving speed information based on vehicle speed information of the moving object 10.

Based on the current position information and the moving speed information received from the communication terminal 20, the user terminal 80, and the user terminal 120, the remote conference server 100 determines that the communication terminal 20 and the user terminal 80 are present in a predetermined range and are being used to participate in the same remote conference while moving. In this case, the remote conference server 100 urges the user 90a and/or the user 90b through the communication terminal 20 and/or the user terminal 80 such that both users 90 in the moving object 10 participate in the conference through one of the communication terminal 20 or the user terminal 80. For example, the remote conference server 100 urges the user 90a and/or the user 90b through the communication terminal 20 and/or the user terminal 80 such that the user 90b of the user terminal 80 participates in the conference through the communication terminal 20. This makes it possible for the communication terminal 20 to urge the user 90a and the user 90b to participate in the remote conference through one communication line.

The communication terminal 20 detects the number of persons aboard the moving object 10, based on an image of an inside of the moving object 10 captured by the image capturing apparatus 28 or information from a seat sensor provided in each of the seats 11. When the user 90b attempts to participate in the conference through the communication terminal 20, the communication terminal 20 accepts the user 90b as the participant in the remote conference through the communication terminal 20, on a condition that the number of participants in the remote conference through the communication terminal 20 does not exceed the number of persons detected in the moving object 10. This makes it possible to prevent the number of users participating in the remote conference from exceeding the number of persons aboard the moving object 10. Furthermore, by many participants participating in the remote conference through the communication terminal 20, it is possible to prevent a communication volume of the communication terminal 20 from exceeding a communication volume predetermined and set for the remote conference.

When the user 90 participates in the remote conference through the communication terminal 20, the communication terminal 20 acquires information for identifying the user 90 who is seated on the corresponding seat 11, from the user 90 through the display apparatus 22, and retains the acquired information as seating information. In another method, the communication terminal 20 identifies the seat 11 on which the user 90 is seated based on a signal received from the user terminal by the wireless communication using the UWB; receives information for identifying the user 90 who is seated on the seat 11 from the user terminal; and retains the received information as seating information. The communication terminal 20 acquires a voice uttered by the user 90 through the microphone 60. The communication terminal 20 identifies the user 90 who is a current speaker, from among the users 90 accepted as the participants in the remote conference, based on the voice acquired through the microphone 60 and the seating information. The communication terminal 20 causes the display apparatus 22 and the user terminal 120 to display an indication that the identified speaker is speaking. This makes it possible to provide a notification to each participant of the remote conference regarding who is speaking, even when a single communication terminal 20 accepts a plurality of users 90 as the participants in the remote conference.

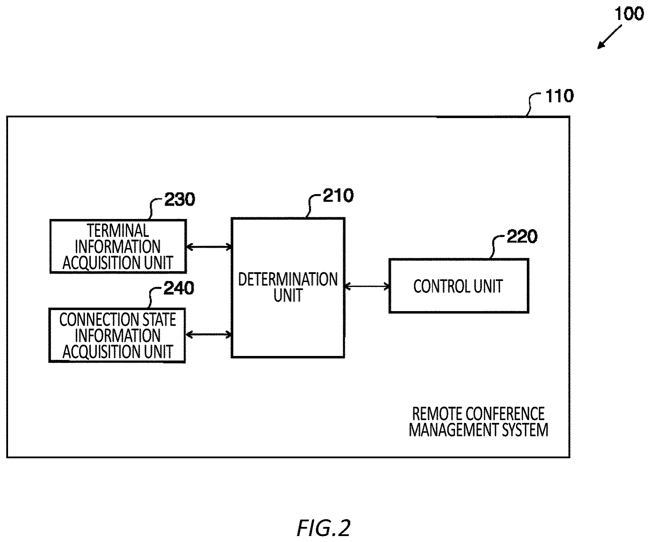

Fig. 2 shows an example of a functional configuration of a remote conference management system 110 included in the remote conference server 100. The remote conference server 100 is responsible for: login processing for the user 90 to the remote conference; processing for a mutual communication between the user terminal 80, the communication terminal 20, and the user terminal 120 which are used by the users to participate in the remote conference; and the like.

The remote conference management system 110 may be realized by one or more computers. The remote conference management system 110 includes a determination unit 210, a control unit 220, a terminal information acquisition unit 230, and a connection state information acquisition unit 240.

The determination unit 210 determines whether or not a first terminal that is used by a first user to participate in the remote conference and a second terminal that is used by a second user to participate in the remote conference, are present in a predetermined range. The first terminal is, for example, the communication terminal 20, and the second terminal is, for example, the user terminal 80. When the determination unit 210 determines that the first terminal and the second terminal are present in the predetermined range, the control unit 220 performs a control to cause, through one terminal of the first terminal or the second terminal, the user of another terminal to participate in the remote conference.

Between the first terminal and the second terminal, the control unit 220 may select, with a higher priority, a terminal that has a better communication status, as the one terminal for causing the user of the another terminal to participate in the remote conference. When the first terminal is a terminal installed in the moving object 10, the control unit 220 may select the first terminal as the one terminal for causing the user of the second terminal to participate in the remote conference.

The terminal information acquisition unit 230 acquires first information indicating the positions of the first terminal and the second terminal. The determination unit 210 determines whether or not the first terminal and the second terminal are present in a predetermined range, based on the first information.

The terminal information acquisition unit 230 may further acquire second information indicating at least one of moving directions or accelerations of the first terminal and the second terminal. The determination unit 210 may determine whether or not the first terminal and the second terminal are present in a predetermined range, based on the first information and the second information.

The connection state information acquisition unit 240 may acquire third information indicating a connection state of the wireless communication between the first terminal and the second terminal. The determination unit 210 may determine whether or not the first terminal and the second terminal are present in the predetermined range, based on the third information.

When the determination unit 210 determines that the first terminal and the second terminal are present in the predetermined range, the control unit 220 may recommend at least one of the first user or the second user that, through one terminal of the first terminal or the second terminal, the user of another terminal participates in the remote conference.

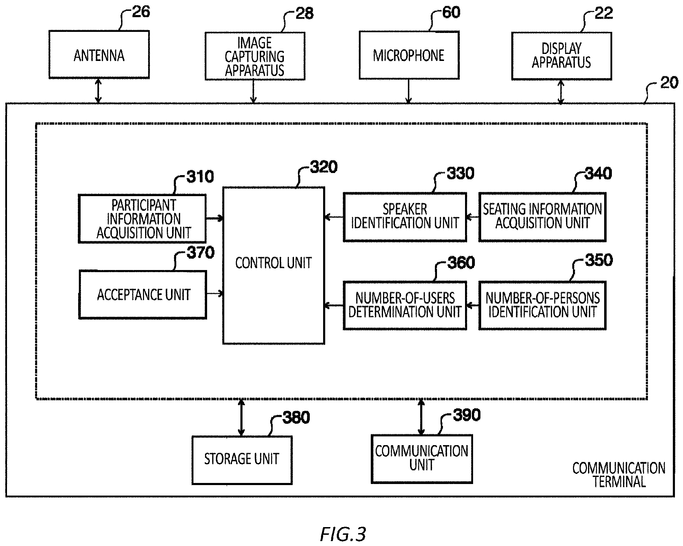

Fig. 3 shows a functional configuration of the communication terminal 20 included in the moving object 10, together with the display apparatus 22, the microphone 60, and the image capturing apparatus 28. The communication terminal 20 includes a participant information acquisition unit 310, a control unit 320, a speaker identification unit 330, a seating information acquisition unit 340, a number-of-persons identification unit 350, a number-of-users determination unit 360, an acceptance unit 370, a storage unit 380, and a communication unit 390.

The storage unit 380 is configured to include a non-volatile storage medium. The non-volatile storage medium may be a semiconductor memory such as a flash memory. The storage unit 380 stores information necessary for the communication terminal 20 to execute the processing. The storage unit 380 may store a program that is executed by a processor included in the communication terminal 20.

The communication unit 390 is responsible for the communication with an outside of the moving object 10. Specifically, the communication unit 390 is responsible for the communication with the remote conference server 100 and the user terminal 120. The communication unit 390 can take the responsibility for the communication with the user terminal 80.

The image capturing apparatus 28 is provided at a position where it is possible to capture an image of an occupant who is seated on the seat 11. The image capturing apparatus 28 may include one or more image capturing apparatuses.

The communication terminal 20 is mounted on the moving object 10 and performs the processing for conducting the remote conference. The number-of-persons identification unit 350 identifies the number of persons aboard the moving object 10. The number-of-users determination unit 360 determines the number of users who are able to be accepted by the communication terminal 20 as the participants in the remote conference, according to the number of persons identified by the number-of-persons identification unit 350. The number-of-users determination unit 360 may determine the number of users who are able to be accepted by the communication terminal 20 as the participants in the remote conference, further according to the communication status of the communication terminal 20.

When the first user is participating in the remote conference by using the communication terminal 20, the participant information acquisition unit 310 acquires information indicating that one or more users who are participating in the remote conference by using the mobile terminals are present in the moving object 10. When the participation information acquisition unit acquires the information indicating that the one or more users who are participating in the remote conference by using the mobile terminals are present in the moving object 10, the control unit 320 may set, as an upper limit, the number of users determined by the number-of-users determination unit 360, and perform a control to cause at least some of the one or more users to participate in the remote conference through the communication terminal 20.

The communication unit 390 continuously transmits the current position information of the communication terminal 20 to the remote conference management system which manages the remote conference. The communication unit 390 further continuously transmits at least one of the moving speed information or the acceleration information of the communication terminal 20, to the remote conference management system which manages the remote conference.

The number-of-persons identification unit 350 identifies the number of persons aboard the moving object 10, based on information detected by a seat sensor provided on a seating seat of the moving object 10. The number-of-persons identification unit 350 may identify the number of persons aboard the moving object 10, by analyzing image information of the inside of the moving object 10 acquired by the image capturing apparatus provided in the moving object 10.

The acceptance unit 370 accepts a plurality of users in the moving object 10 as the participants in the remote conference. The speaker identification unit 330 identifies a speaker from among the plurality of users accepted by the acceptance unit 370 as the participants in the remote conference. The control unit 320 performs, on the remote conference system, a control to highlight and display the user identified by the speaker identification unit 330 as the speaker.

The speaker identification unit 330 identifies the speaker from among the plurality of users, based on at least one of (i) the image information of the inside of the moving object 10 acquired by the image capturing apparatus 28 mounted on the moving object 10, or (ii) voice information acquired by the microphone 60 installed on the moving object 10.

The seating information acquisition unit 340 acquires seating positions of the plurality of users in the moving object 10. The speaker identification unit 330 identifies the speaker from among the plurality of users, based on a sound source direction that is detected from the voice information acquired by the plurality of microphones 60 mounted on the moving object 10, installation positions of the plurality of microphones 60 in the moving object 10, and the seating positions of the plurality of users acquired by the seating information acquisition unit 340.

The speaker identification unit 330 identifies the speaker from among the plurality of users, based on the voice information acquired by each of the microphones 60 respectively mounted to correspond to the plurality of seats of the moving object 10, and the seating positions of the plurality of users acquired by the seating information acquisition unit 340.

When the acceptance unit 370 accepts the plurality of users as the participants in the conference, the seating information acquisition unit 340 acquires the seating positions of the plurality of users, by acquiring information for specifying a seat position of the moving object 10 from each of the plurality of users. When the acceptance unit 370 accepts the plurality of users as the participants in the conference, the seating information acquisition unit 340 may acquire the seating positions of the plurality of users, based on the position of the user terminal which is identified from the wireless signal received from the user terminal that is carried by each of the plurality of users. For example, the seating information acquisition unit 340 may calculate, based on a UWB communication signal received through the antenna 26 between the user terminal 70 and itself, the position of the user terminal 70; and acquire the position of the user 90a based on the calculated position of the user terminal 70.

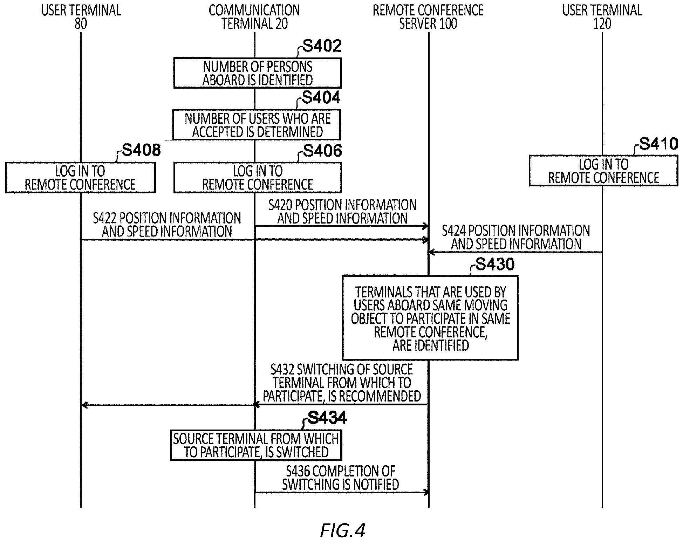

Fig. 4 shows an example of a processing sequence that is executed by the user terminal 80, the communication terminal 20, the remote conference server 100, and the user terminal 120. It is assumed that at a start of the present sequence, there is no user 90 using the communication terminal 20 to participate in the remote conference.

In S402, the number-of-persons identification unit 350 of the communication terminal 20 identifies the number of persons aboard the moving object 10. The number-of-persons identification unit 350 of the communication terminal 20 identifies the number of persons aboard the moving object 10, based on the image of the inside of the moving object 10 captured by the image capturing apparatus 28, and the information from the seat sensor provided in each of the seats 11.

In S404, the number-of-users determination unit 360 determines the number of users who are able to be accepted by the acceptance unit 370, according to the number of persons identified by the number-of-persons identification unit 350. For example, the number-of-users determination unit 360 determines the number of persons identified by the number-of-persons identification unit 350, as the upper limit of the number of users who are able to be accepted by the acceptance unit 370.

Here, the number-of-users determination unit 360 may determine the number of users who are able to be accepted by the acceptance unit 370, according to the communication status of the communication unit 390 acquired by the connection state information acquisition unit 240. The number-of-users determination unit 360 may determine a smaller number of users who are able to be accepted by the acceptance unit 370, as the communication status of the communication unit 390 acquired by the connection state information acquisition unit 240 becomes worse.

In S406, when the user 90a performs an operation to log in to the remote conference using the communication terminal 20, the acceptance unit 370 accepts the user 90a as the participant in the remote conference, and performs the login processing such as transmitting, to the remote conference server 100, authentication information that is input at a time of the login.

In S408, when the user 90b performs an operation to log in to the remote conference, using the user terminal 80, in which the user 90a participates, the user terminal 80 performs the login processing such as transmitting, to the remote conference server 100, authentication information that is input at a time of the login. Similarly, in S410, when the user 90c performs an operation to log in to the remote conference, using the user terminal 120, in which the user 90a participates, the user terminal 120 performs the login processing such as transmitting, to the remote conference server 100, authentication information that is input at a time of the login.

In the login processing of S406, the seating information acquisition unit 340 acquires the seating position of the user 90 in the moving object 10. For example, as a part of the login processing, the seating information acquisition unit 340 causes the display apparatus 22a to display a screen for specifying the seating position of the user 90a, and acquires the information indicating the seating position that is input by the user 90a, through the display apparatus 22a. For example, the seating position may be information for identifying the seat 11 on which the user 90a is seated, for example. The seating information acquisition unit 340 retains, as the seating information, information in which user identification information for identifying the user 90a is associated with seat identification information for identifying the seat 11 on which the user 90a is seated.

In another method, the seating information acquisition unit 340 identifies the seat 11 on which the user 90 is seated, based on the signal received by the wireless communication using the UWB. For example, the seating information acquisition unit 340 calculates a distance between the antenna 26a and the user terminal 70, a distance between the antenna 26b and the user terminal 70, and a distance between the antenna 26c and the user terminal 70, based on a TOA (Time of Arrival); and calculates the position of the user terminal 70 by triangulation, based on each of the calculated distances. The seating information acquisition unit 340 may calculate an angle of arrival of the signal from the user terminal 70 to each antenna 26, based on the difference in the time at which each antenna 26 receives the signal that is transmitted from the user terminal 70; and calculate the position of the user terminal 70, based on the calculated the angle of arrival of the signal and the position of each antenna 26. The seating information acquisition unit 340 identifies the seat 11 on which the user 90a who carries the user terminal 70 is seated, based on the calculated position of the user terminal 70 and the position of the seat 11. The seating information acquisition unit 340 may retain, as the seating information, information in which the user identification information of the user 90a that is in advance associated with the user terminal 70, is associated with the seat identification information for identifying the seat 11 on which the user 90a is seated. The seating information acquisition unit 340 may receive the user identification information for identifying the user 90a from the user terminal 70; and retain, as the seating information, information in which the received user identification information is associated with the seat identification information for identifying the seat 11 on which the user 90a is seated. The login processing may be performed by using the user terminal 70, and the seating information acquisition unit 340 may receive, from the user terminal 70, the user identification information that is input to the user terminal 70 in a part of the login processing.

In S420, when the communication terminal 20 completes the login to the remote conference, the communication terminal 20 starts the processing of periodically transmitting the position information and the speed information to the remote conference server 100. For example, the communication unit 390 transmits, to the remote conference server 100 at a predetermined time interval, the current position information calculated based on signals received from the GNSS satellite, and the current position information that is calculated from the temporal change of the current position information, or the moving speed information based on the vehicle speed information of the moving object 10. Similarly, when the logins to the remote conference are completed, the user terminal 80 and the user terminal 120 start the processing of periodically transmitting the position information and the speed information to the remote conference server 100 (S422 and S424). The user terminal 80 and the user terminal 120 may transmit the current moving speed information that is calculated from the temporal change of the current position information, to the remote conference server 100. The terminal information acquisition unit 230 of the remote conference server 100 receives the position information and the speed information from the user terminal 80, the communication terminal 20, and the user terminal 120. In S420, S422, and S424, each of the user terminal 80, the communication terminal 20, and the user terminal 120 may start the processing of periodically transmitting the acceleration information to the remote conference server 100, in addition to the moving speed or instead of the moving speed.

In S430, the determination unit 210 of the remote conference server 100 identifies the terminals that are being used by the users 90 aboard the same moving object 10 to participate in the same remote conference. For example, based on the position information and speed information received by the terminal information acquisition unit 230 from each of the user terminal 80, the communication terminal 20, and the user terminal 120, and the identification information of the terminal that is being used by the user who is already logged in, the terminals that are being used by the users 90 aboard the same moving object 10 to participate in the same remote conference, are identified. For example, when the position of the user terminal 80 and the position of the communication terminal 20 are in a predetermined range, and a magnitude of the difference between the moving speed of the user terminal 80 and the moving speed of the communication terminal 20 is smaller than a predetermined value, the determination unit 210 determines that the user terminal 80 and the communication terminal 20 are being used by the users 90 aboard the same moving object 10 to participate in the same remote conference.

Here, from the user terminal 80, the communication terminal 20, and the user terminal 120, the connection state information acquisition unit 240 acquires the information indicating the connection state with another terminal by the wireless communication; and based on the acquired information, the terminals that are being used by the users 90 aboard the same moving object 10 to participate in the same remote conference, may be identified. For example, when the user terminal 80 and the communication terminal 20 are connected by WiFi (registered trademark), the communication unit 390 of the communication terminal 20 and the user terminal 80 transmit, to the remote conference server 100, the identification information and information indicating the connection states of one or more terminals that are connected by the WiFi (registered trademark). The WiFi connection state may include information indicating a strength of the signal received from another terminal. The connection state information acquisition unit 240 acquires the information transmitted from the communication terminal 20 and the user terminal 80; and the determination unit 210 identifies, based on the information, the terminals that are being used by the users 90 aboard the same moving object 10 to participate in the same remote conference. The determination unit 210 may identify the terminals which are connected by the WiFi (registered trademark) and which have a strength of the received signal that is higher than a predetermined value, as the terminals that are being used by the users 90 aboard the same moving object 10 to participate in the same remote conference.

In S432, the control unit 220 of the remote conference server 100 performs the processing for transmitting, to the communication terminal 20 and the user terminal 80, a switching recommendation for recommending switching of a source terminal from which to participate in the remote conference. For example, the control unit 220 transmits, to the communication terminal 20 and the user terminal 80, information indicating: that the user 90a and the user 90b are participating in the same remote conference; and a recommendation for the user 90b to participate in the remote conference through the communication terminal 20. In this manner, the participant information acquisition unit 310 of the communication terminal 20 acquires information indicating that one or more users 90 who are participating in the remote conference using the user terminal 80 are present in the moving object 10.

Here, the control unit 220 may acquire the communication status of each of the user terminal 80 and the user terminal 120, and select, between the user terminal 80 and the user terminal 120, a terminal having a better communication status, as the source terminal from which to participate in the remote conference. This makes it possible for the plurality of users 90 to be able to participate in the remote conference through a communication line of a terminal having a more stable communication status.

In S434, the control unit 320 of the communication terminal 20 performs the processing for switching the source terminal from which to participate in the remote conference; and in S436, the communication terminal 20 transmits, to the remote conference server 100, a notification of a completion of switching the source terminal from which to participate. For example, in S434, the control unit 320 causes the display apparatus 22 to display a screen for accepting an operation, from the user 90b, to approve of participating in the remote conference through the communication terminal 20. When the communication terminal 20 detects that the user 90b performs the approval operation on the display apparatus 22b, in S436, the communication terminal 20 transmits the notification of a completion of switching to the remote conference server 100, the notification indicating that the user 90b participates in the remote conference from the communication terminal 20.

In S434, Fig. 4 shows the case where the control unit 320 performs the processing for switching the source terminal from which to participate in the remote conference. However, the control unit 320 may perform the processing for switching the source terminal from which to participate in the remote conference, only when the number of users determined by the number-of-users determination unit 360 is not exceeded.

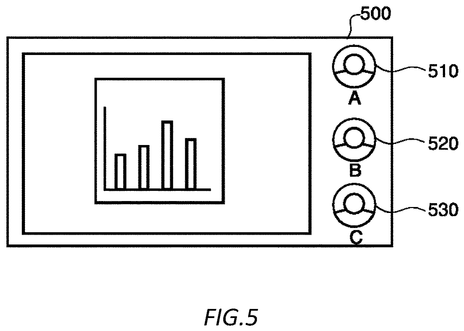

Fig. 5 schematically shows an example of a screen 500 which is displayed on the display apparatus 22 or the user terminal 120. The screen 500 shows a case where the user 90a is participating in the remote conference from the communication terminal 20, the user 90b is participating in the remote conference from the user terminal 80, and the user 90c is participating in the remote conference from the user terminal 120.

The screen 500 includes an object 510, an object 520, and an object 530. The object 510 includes, for example, a facial image of the user 90a captured by the image capturing apparatus 28. The object 520 includes a facial image of the user 90b captured by the user terminal 80. The object 530 includes a facial image of the user 90c captured by the user terminal 120.

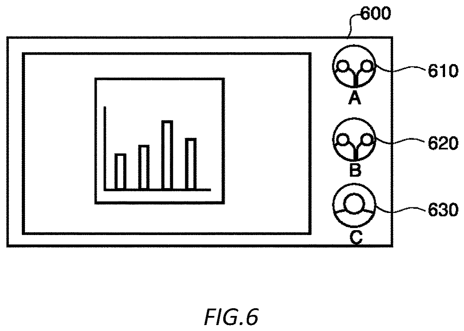

Fig. 6 schematically shows an example of a screen 600 which is displayed on the display apparatus 22 or the user terminal 120. The screen 600 shows a case where the user 90a and the user 90b are participating in the remote conference from the communication terminal 20, and the user 90c is participating in the remote conference from the user terminal 120.

The screen 600 includes an object 610, an object 620, and an object 630. The object 610 includes, for example, facial images of the user 90a and the user 90b captured by the image capturing apparatus 28. The object 620 includes the facial images of the user 90a and the user 90b captured by the image capturing apparatus 28, in the same manner as that in the object 610. The object 630 includes a facial image of user 90c captured by the user terminal 120 and transmitted from the user terminal 120.

In this manner, with the communication terminal 20, even when the plurality of users 90 participate in the remote conference through a single communication terminal 20, it is possible to handle the plurality of users 90 as separate participants. This makes it possible for another participant to know that from the communication terminal 20, the plurality of users 90 are participating in the remote conference.

In the example of Fig. 6, the control unit 320 uses the image captured by the image capturing apparatus 28 as both of a participant image of the user 90a and a participant image of the user 90b. In another mode, the control unit 320 may extract each of the facial image of the user 90a and the facial image of the user 90b from the image captured by the image capturing apparatus 28; and process the extracted facial image of the user 90a as the participant image of the user 90a, and the extracted facial image of the user 90b as the participant image of the user 90b.

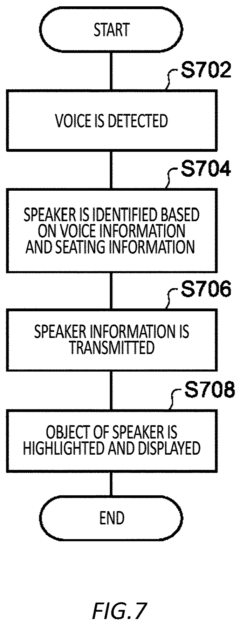

Fig. 7 is a flowchart showing a processing procedure in relation to processing of identifying a speaker by the communication terminal 20. The processing of the present flowchart is repeatedly executed, for example, when the communication terminal 20 is executing the processing relating to the remote conference in cooperation with the remote conference server 100.

In S702, the speaker identification unit 330 detects the voice from the information collected by the microphone 60. In S704, the speaker identification unit 330 identifies the speaker based on the voice information detected in S702 and the seating information.

For example, when the user 90b is the speaker, a sound volume of the voice detected by the microphone 60b is greater than sound volumes of the voices detected by the other microphones which are the microphone 60a, the microphone 60c, and the microphone 60d. Therefore, the speaker identification unit 330 determines that the speaker is seated on the seat 11b provided at a position corresponding to the microphone 60b. The speaker identification unit 330 refers to the seating information and identifies, as the speaker, the user 90b who is identified by the user identification information associated with the seat identification information of the seat 11b.

**In** S706, the communication unit 390 transmits speaker information to the user terminal 120. For example, the communication unit 390 transmits the identification information of the speaker in the remote conference system, to the user terminal 120, as the speaker information.

**In** S708, the control unit 320 highlights and displays the object of the speaker. For example, when the user 90b is the speaker, the control unit 320 highlights and displays the object 620. At this time, the control unit 320 does not highlight and display the object 610.

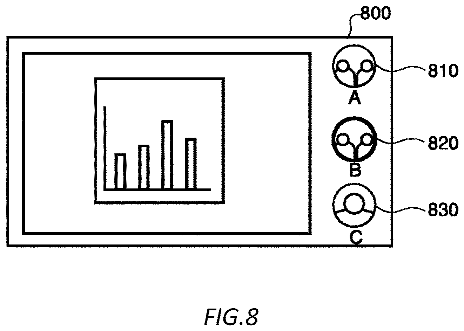

Fig. 8 schematically shows an example of a screen 800 which is displayed on the display apparatus 22 or the user terminal 120. The screen 800 shows a case where the user 90a and the user 90b are participating in the remote conference from the communication terminal 20, and the user 90c is participating in the remote conference from the user terminal 120, and the user 90b is speaking.

The screen 800 includes an object 810, an object 820, and an object 830. The object 810 and the object 830 are the same as the object 610 and the object 630, respectively. The object 820 includes, for example, facial images of the user 90a and the user 90b captured by the image capturing apparatus 28. The user 90b is identified as the speaker, and thus the object 820 is highlighted and displayed to indicate that the user 90b is the speaker.

In this way, with the communication terminal 20, even when the plurality of users are participating in the remote conference through a single communication terminal 20, it is possible to provide a notification to another conference participant regarding who is the speaker.

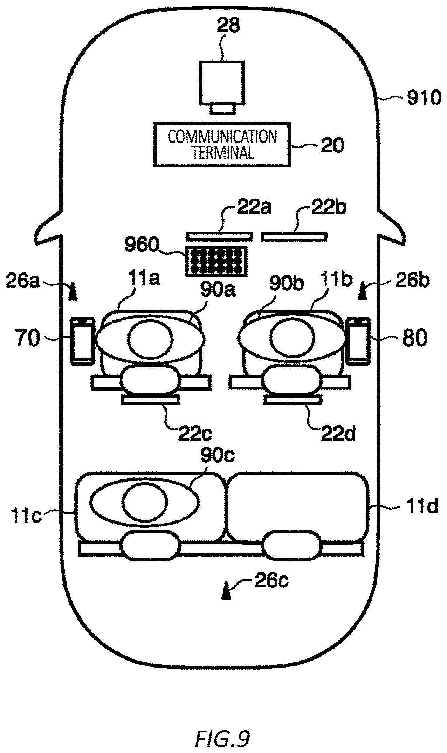

Fig. 9 shows a configuration of a moving object 910 as a modified example of the moving object 10. The moving object 910 includes a microphone array 960 instead of the microphone 60, which is a difference from the moving object 10. Therefore, the difference from the moving object 10 will be mainly described here.

The microphone array 960 includes a plurality of microphones. The speaker identification unit 330 of the communication terminal 20 uses the microphone array 960 to locate a sound source.

For example, when a distance from the sound source to each microphone is different, the time it takes for a sound wave to reach each microphone is different, and a difference in arrival time to each microphone is a function of the position of the sound source. The speaker identification unit 330 uses this principle to identify a direction of the sound source, based on the voice signals acquired by the plurality of microphones included in the microphone array 960. The speaker identification unit 330 can identify the speaker from among users 90, based on the estimated direction of the sound source, an installation position of the microphone array in the moving object 10, and the seating information acquired by the seating information acquisition unit 340.

In the above embodiment, the speaker identification unit 330 identifies the speaker by using voices acquired by the plurality of microphones. Instead of using the voices acquired by the plurality of microphones, or in addition to using the voices acquired by the plurality of microphones, the speaker identification unit 330 may identify the speaker by recognizing the voice of the user 90. For example, the speaker identification unit 330 may acquire a voiceprint of the speaker in advance when the login processing or the like is performed, and retain, as voiceprint information, the acquired voiceprint in association with the identification information of the user 90. The speaker identification unit 330 may extract the voiceprint from the voice acquired by the microphone installed in the moving object 10 when the remote conference is conducted, and identify the speaker from among the plurality of users 90, based on the extracted voiceprint and the voiceprint information.

In another mode, the speaker identification unit 330 may identify the speaker from the facial image of each of the plurality of users 90 captured by the image capturing apparatus 28. For example, the speaker identification unit 330 may identify the speaker from among the plurality of users 90, based on a movement of a mouth of the facial image. The speaker identification unit 330 may identify the speaker from among the plurality of users 90, further based on the voice collected by the microphone, in addition to the movement of the mouth of the facial image.

In the embodiment described above, the moving object 10 is set as a vehicle. However, any moving object other than the vehicle can be applied as the moving object 10. For example, the moving object 10 may be transportation equipment such as a train, an airplane, and a ship.

With the remote conference system 5 according to the embodiment described above, when the plurality of users 90 in the moving object 10 are participating in the same remote conference from the different terminals, it is possible to urge them to participate in the conference through one terminal. This makes it possible to urge the plurality of users to participate in the remote conference through a single communication line. Further, the communication terminal 20 determines the upper limit of the number of users participating in the remote conference through the communication terminal 20, according to the number of persons aboard the moving object 10 and the communication status of the communication terminal 20, and thus it is possible to prevent a communication volume of the communication terminal 20 from exceeding a communication volume predetermined and set for the remote conference. Further, when the plurality of users are participating in the remote conference through the moving object 10, the current speaker is identified, based on the voices acquired through the plurality of microphones provided on the moving object 10, and the seating information; and the message that the identified speaker is speaking is displayed on the display apparatus 22 and the user terminal 120. This makes it possible to provide a notification to each participant of the remote conference regarding who is speaking, even when a single communication terminal 20 accepts the plurality of users 90 as the participants in the remote conference.

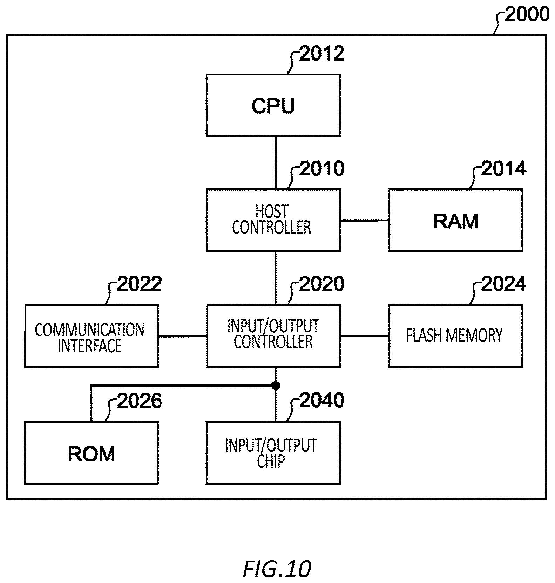

Fig. 10 shows an example of a computer 2000 in which a plurality of embodiments of the present invention may be entirely or partially embodied. The program installed on the computer 2000 can cause the computer 2000 to function as the remote conference management system 110 according to the embodiment or each part of the system, or various apparatuses such as the communication terminal 20 or each part of the apparatus, to perform operations associated with the system or each part of the system or the apparatus or each part of the apparatus, and/or to perform a process or steps of the process according to the embodiment. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer-readable storage medium such as a CD-ROM, a DVD-ROM, or a memory card. The RAM 2014, the ROM 2026, or the flash memory 2024 is an example of the computer-readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. An apparatus or a method may be actualized by executing operations or processing of information according to a use of the computer 2000.

For example, when a communication is executed between the computer 2000 and an external device, the CPU 2012 may execute a communication program loaded on the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information retrieval/replacement, or the like described herein and specified by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute, are stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The programs or software modules described above may be stored in the computer-readable storage medium on the computer 2000 or in the vicinity of the computer 2000. A recording medium such as a hard disk or a RAM provided in a server system connected to a dedicated communication network or the Internet can be used as the computer-readable storage medium. A program stored in the computer-readable storage medium may be provided to the computer 2000 via a network.

A program, which is installed on the computer 2000 and causes the computer 2000 to function as the remote conference management system 110, may work on the CPU 2012 or the like to cause the computer 2000 to function as each part of the remote conference management system 110. Information processing written in these programs functions, by being read by the computer 2000, as each part of the remote conference management system 110 that is specific means by which software and the above-described various hardware resources cooperate. Then, by the specific means realizing calculation or processing of information in accordance with a purpose of use of the computer 2000 in the present embodiment, the unique remote conference management system 110 in accordance with the purpose of use is constructed.

A program, which is installed on the computer 2000 and causes the computer 2000 to function as the communication terminal 20, may work on the CPU 2012 or the like to cause the computer 2000 to function as each part of the communication terminal 20. Information processing written in these programs functions, by being read by the computer 2000, as each part of the communication terminal 20 that is specific means by which software and the above-described various hardware resources cooperate. Then, by the specific means realizing calculation or processing of information in accordance with a purpose of use of the computer 2000 in the present embodiment, the unique communication terminal 20 in accordance with the purpose of use is constructed.

Various embodiments have been described with reference to the block diagrams and the like. In the block diagrams, each block may represent (1) a stage of a process in which an operation is executed, or (2) each part of the apparatus having a role in executing the operation. A specific step and each part may be implemented by a dedicated circuit, a programmable circuit supplied with computer-readable instructions stored on a computer-readable storage medium, and/or a processor supplied with computer-readable instructions stored on a computer-readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer-readable storage medium may include any tangible device capable of storing instructions to be executed by an appropriate device, and as a result, the computer-readable storage medium having instructions stored therein forms at least a part of a product including instructions which can be executed to provide means for executing processing procedures or operations specified in the block diagrams. An example of the computer-readable storage medium may include an electronic storage medium, a magnetic storage medium, an optical storage medium, an electromagnetic storage medium, a semiconductor storage medium, etc. A more specific example of the computer-readable storage medium may include a floppy (registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a Blu-ray (registered trademark) disc, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

Computer-readable instructions may be provided to a processor of a general purpose computer, a special purpose computer, or another programmable data processing apparatus, or to the programmable circuit, locally or via a local area network (LAN), wide area network (WAN) such as the Internet or the like, and a computer-readable instruction may be executed to provide means for executing operations specified in the described processing procedures or block diagrams. Examples of the processor include a computer processor, a processing unit, a microprocessor, a digital signal processor, a controller, a microcontroller, and the like.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

5: remote conference system
10: moving object
11: seat
20: communication terminal
22: display apparatus
26: antenna
28: image capturing apparatus
60: microphone
70: user terminal
80: user terminal
90: user
100: remote conference server
110: remote conference management system
120: user terminal
380: storage unit
390: communication unit
210: determination unit
220: control unit
230: terminal information acquisition unit
240: connection state information acquisition unit
310: participant information acquisition unit
320: control unit
330: speaker identification unit
340: seating information acquisition unit
350: number-of-persons identification unit
360: number-of-users determination unit
370: acceptance unit
500: screen
510: object
520: object
530: object
600: screen
610: object
620: object
630: object
800: screen
810: object
820: object
830: object
910: moving object
960: microphone array
2000: computer
2010: host controller
2012: CPU
2014: RAM
2020: input/output controller
2022: communication interface
2024: flash memory
2026: ROM
2040: input/output chip.

## Claims

1. A communication terminal that is mounted on a moving object for a remote conference to be conducted, the communication terminal comprising:
an acceptance unit which accepts a plurality of users in the moving object as participants in the remote conference;
a speaker identification unit which identifies a speaker from among the plurality of users accepted by the acceptance unit as the participants in the remote conference; and
a control unit which performs, on a remote conference system, a control to highlight and display a user identified by the speaker identification unit as the speaker.

2. The communication terminal according to claim 1, wherein
the speaker identification unit identifies the speaker from among the plurality of users, based on at least one of (i) image information of an inside of the moving object acquired by an image capturing apparatus mounted on the moving object, or (ii) voice information acquired by a microphone installed on the moving object.

3. The communication terminal according to claim 1, further comprising:
a seating information acquisition unit which acquires seating positions of the plurality of users in the moving object, wherein
the speaker identification unit identifies the speaker from among the plurality of users, based on a sound source direction that is detected from voice information acquired by a plurality of microphones mounted on the moving object, installation positions of the plurality of microphones in the moving object, and the seating positions of the plurality of users acquired by the seating information acquisition unit.

4. The communication terminal according to claim 1, further comprising:
a seating information acquisition unit which acquires seating positions of the plurality of users in the moving object, wherein
the speaker identification unit identifies the speaker from among the plurality of users, based on voice information acquired by each of microphones respectively mounted to correspond to a plurality of seats of the moving object, and the seating positions of the plurality of users acquired by the seating information acquisition unit.

5. The communication terminal according to claim 3 or 4, wherein
when the acceptance unit accepts the plurality of users as participants in a conference, the seating information acquisition unit acquires the seating positions of the plurality of users, by acquiring information for specifying a seat position of the moving object from each of the plurality of users.

6. The communication terminal according to claim 3 or 4, wherein
when the acceptance unit accepts the plurality of users as participants in a conference, the seating information acquisition unit acquires the seating positions of the plurality of users, based on a position of a user terminal which is identified from a wireless signal received from the user terminal that is carried by each of the plurality of users.

7. The communication terminal according to any one of claims 1 to 4, wherein
the moving object is a vehicle.

8. A method which is executed by a communication terminal that is mounted on a moving object for a remote conference to be conducted, the method comprising:
accepting a plurality of users in the moving object as participants in the remote conference;
identifying a speaker from among the plurality of users accepted as the participants in the remote conference; and
performing, on a remote conference system, a control to highlight and display a user identified from among the plurality of users as the speaker.

9. A program for causing a computer to function as the communication terminal according to any one of claims 1 to 4.
